# EUROPEAN PATENT SPECIFICATION

(11) **EP 4 326 597 B1**
(45) Date of publication and mention of the grant of the patent: **12.11.2025**
(21) Application number: 22731988.6
(22) Date of filing: 21.04.2022
(51) Int. Cl.: B62B 3/00, B62B 3/02, B62B 3/16

(54) **LOAD CARRIER WITH STORAGE FACILITY IN THE BASE FOR STORING COLUMNS**
LASTENTRÄGER MIT LAGEREINRICHTUNG IM SOCKEL ZUR LAGERUNG VON SÄULEN
SUPPORT DE CHARGE AVEC INSTALLATION DE STOCKAGE DANS LA BASE POUR STOCKER DES COLONNES

(30) Priority: 23.04.2021 DK PA202170185
(43) Date of publication of application: 28.02.2024
(73) Proprietor: UNI-TROLL EUROPE APS, 5690 Tommerup (DK)
(72) Inventor: MOGENSEN, Erling, 5500 Middelfart (DK)
(74) Representative: Zacco Denmark A/S
(86) International application number: PCT/DK2022/050080
(87) International publication number: WO 2022/223088

(56) References cited:
- EP-A1- 3 006 303
- WO-A1-2016/048153
- WO-A1-2020/135910
- US-A- 3 887 207

## Description

The present invention relates to a load carrier comprising a rectangular base frame with a number of transverse or longitudinal bars and/or plate portions surrounded by a frame portion, which base frame is provided with at least two sets of wheels on its bottom face, and wherein, in each corner of the base frame, connections are formed for attachment of a column, where, on the transverse or longitudinal bars and/or plate portions of the base frame, one or more substantially U-shaped profiles with plane sides and base are attached.

### Background of the invention

Load carriers such as this one are used for instance for transport of plants and flowers as well as fruit and vegetables or other goods or products and are commonly used in retailing. Such load carrier, or cart, is often provided with a set of front wheels and a set of rear wheels mounted on the bottom face of a base frame with vertical columns, extending upwards from the corners of the base frame. One or more shelves are arranged between the columns to support the load of the cart. The shelves are usually connected to each of the vertical columns by means of hooks placed in the corners of the shelves. The hooks are configured to engage with slits placed at suitable intervals in the longitudinal direction of the columns, and the shelves can hereby be mounted or dismounted, moved and/or removed, depending on the situation of use. The shelves being removable also means that the load carriers take up less space during return transport in empty condition.

### Prior art

Load carriers are well-known in the art, wherein the base frame forms a large open space, in which columns can be stored, which are dismounted before empty return transport The columns are usually manufactured in shorter parts that can be combined to a longer column. Normally, a column is combined of two or more parts to obtain a height corresponding to a cargo compartment during transport.

From EP 3 006 303 A1, US 3 887 207 A and WO 2020/135910 A1 load carriers are known, which load carriers comprises a rectangular base frame with a number of transverse or longitudinal bars and/or plate portions surrounded by a frame portion, which base frame is provided with at least two sets of wheels on its bottom face, and wherein, in each corner of the base frame, connections are formed for attachment of a column are formed, where, on the transverse or longitudinal bars and/or plate portions of the base frame, one or more substantially U-shaped profiles with plane sides and base are attached.

### Objects of the invention

The object of the invention is to provide a load carrier, which takes up less space during transport, when it is returned empty, is easy to disassemble and assemble and is noise-dampened when it is run over a foundation or transported in any other manner.

A problem with prior art is that when the load carrier is to be returned empty, and the columns are arranged in the cavity of the base, the columns will be randomly placed, so that they are not oriented in the same direction. Moreover, handling of the load carrier, when it is run over a foundation that is not completely plane, will lead to a great deal of unwanted noise.

The problem, which is desired to be solved by the load carrier according to the invention, is arrangement and storage of the columns during transport in an empty condition, so that the columns are not placed randomly, and so that the columns and the base frame do not make unnecessary noise.

### Novelty

This is obtained by the plane sides of the profile are in one or more areas provided with impressions extending into an upwardly open channel of the profile.

These U-shaped profiles hereby form storage facilities for storage of the columns, when the columns have been disassembled from the attachments in the corners of the base frame and from each other.

Thus, it is avoided that they can clatter around in the base of the load carrier and they are placed in a suitable manner in a well-defined direction relative to the base frame.

It also enables automation of laying down and lifting out as well as assembly and disassembly of columns, for example by means of robot technology or another form of automated gripper arms.

Hereby, it is obtained that the impressions can retain a column that is dimensioned such that it fits loosely into the profile, but that the impressions apply a clamping force on the column. It could also be said that the profile is dimensioned according to the columns.

By the impressions clamping around a column, it is kept in place in the profile, and as the column is retained, noise is reduced during transport and handling of the load carrier. At the same time, a distance between the sides of the profiles and the sides or edges of the column is established, which will also prevent noise.

In one embodiment, an impression or a protrusion is formed in the profile base, rising from the profile base.

Thus, it is obtained that a distance between the profile base and a column, laid into the profile is established. By establishing this distance, there is no contact along the entire length of the column between the profile base and the one side of the column, which will dampen the noise.

In one embodiment, the impressions of the plane sides of the profile are arranged in pairs substantially opposite each other, and the impressions are arranged travelling slantwise, such that a lower end of the impressions is closer to the nearest end of the profile relative to an upper end of the impression.

Hereby an orientation of the impression is obtained, so that it is possible to lay a column into the profile without the end of the column coming into contact with an edge or a side of the impression, which is an advantage for example in connection with automated laying down of the columns.

In yet another embodiment, the impressions are oblong.

In one embodiment, the impression or a protrusion rising from the profile base is arranged on a level with a pair of impressions in the plane sides of the profile.

Hereby it is obtained that the impressions and/or protrusions are placed close to each other, thereby offering the possibility of local well-defined retention.

In one embodiment, a set of impressions and/or protrusions are arranged in an end area at both ends of the profile.

Hereby it is obtained that a column can be retained at least in an end area of the profile. This does not mean that there cannot be one or more sets of impressions and/or protrusions arranged in an area of the profile that is not an end area.

In one embodiment, the sides and/or base of the profile are provided with openings.

Hereby, both a weight saving and not least a reduction of noise are obtained as it is possible for generated sound to escape through the openings and the profiles will not form a kind of resonance box.

In one embodiment, the cross section of the profiles is trapezoid.

Hereby, a higher strength of the profile is obtained as well as easier laying down, as the profile hereby has slightly funnel-shaped sides.

In one embodiment, the profiles are placed with their upwardly open channel travelling in the longitudinal direction of the base frame.

Hereby, it is obtained that a number of long column parts can be stored in the profiles.

In an alternative embodiment, the profiles are placed with their upwardly open channels travelling in the transverse direction of the base frame.

Hereby, it is obtained that a larger number of short column parts can be stored in the profiles compared with profiles travelling in the longitudinal direction.

The above and other features and advantages of the present invention will be evident to the person skilled in the art through the following detailed description of exemplary embodiments thereof with reference to the accompanying drawing, wherein:
- Fig. 1: shows a base frame of a load carrier,
- Fig. 2: shows a base frame of the load carrier in Fig. 1, shown in section II-II

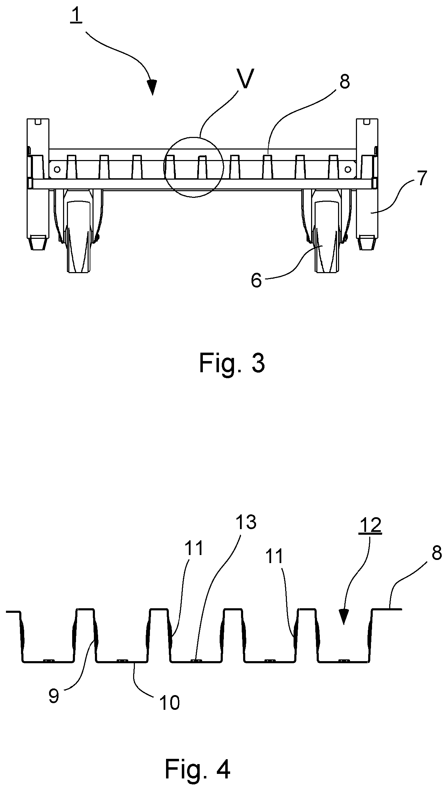

- Fig. 3: shows a base frame of the load carrier in Fig. 1, shown in section III-III
- Fig. 4: shows a slightly enlarged version of a profile with a number of channels, viewed from one end,
- Fig. 5: shows a section of a profile marked with the circle V in Fig. 3,
- Fig. 6: shows a section through a portion of a profile with a column laid in,
- Fig. 7: shows a base frame of a load carrier viewed from below,
- Fig. 8: shows an embodiment of a base frame of a load carrier viewed from above, wherein the channels travel longitudinally,
- Fig. 9: shows an embodiment of a base frame of a load carrier viewed from above, wherein the channels travel transversely, and
- Fig. 10: shows two base frames for load carriers, which are stacked on top of each other in a transport situation.

Various embodiments are described below with reference to the figures. Likewise, reference numerals refer to the same elements in the entire text. Similar elements will thus not be described in detail with regard to the description of each figure.

It should also be noted that the figures are only intended for facilitating the description of the embodiments.

They should not be seen as an exhaustive description of the present invention or as a limitation of the scope of the present invention. Moreover, an illustrated embodiment will not necessarily need to have all the shown aspects or advantages.

An aspect or an advantage described in connection with a certain embodiment is not necessarily limited to this embodiment and can be put into practice in other embodiments even if they are not so illustrated of if they are not so explicitly described.

Throughout the application the same reference numerals are used for identical or corresponding portions.

Load carriers 1, such as carts, are used for example for transport of plants and flowers as well as fruit and vegetables or other goods or products and are commonly used in retailing. Such a load carrier 1, or cart, comprises a rectangular base frame 2 with a number of transverse or longitudinal bars 3 and/or plate portions 4 surrounded by a frame portion 5. On its bottom face, the base frame 2 is provided with at least two sets of wheels 6, and in each corner of the base frame 2, connections 7 are formed for attachment of a column 20.

On the transverse or longitudinal bars 3 and/or plate portions 4 of the base frame 2 one or more substantially U-shaped profiles 8 with plane sides 9 and base 10 are attached.

One set of wheels 6 can be of the type that can pivot or swing about a vertical axis, so that the load carrier 1 can be controlled manually.

The profiles 8 can be attached to the transverse or longitudinal bars 3 and/or plate portions 4 of the base frame 2 by means of gluing, welding or riveting or by means of screws or other types of fasteners. Between the transverse or longitudinal bars 3 and/or plate portions 4 of the base frame 2 and the profiles 8, a noise-dampening material can be disposed in order not to transform noise from the profiles to the base frame or vice versa.

The plane sides 9 of the profile 8 are in one or more areas provided with impressions 11 extending into an upwardly open channel 12 of the profile 8.

The impressions 11 reduce the width of the channel 12 of the profile 8, exactly so the impressions 11 apply a clamping force on a column 20, which is arranged in the channel 12.

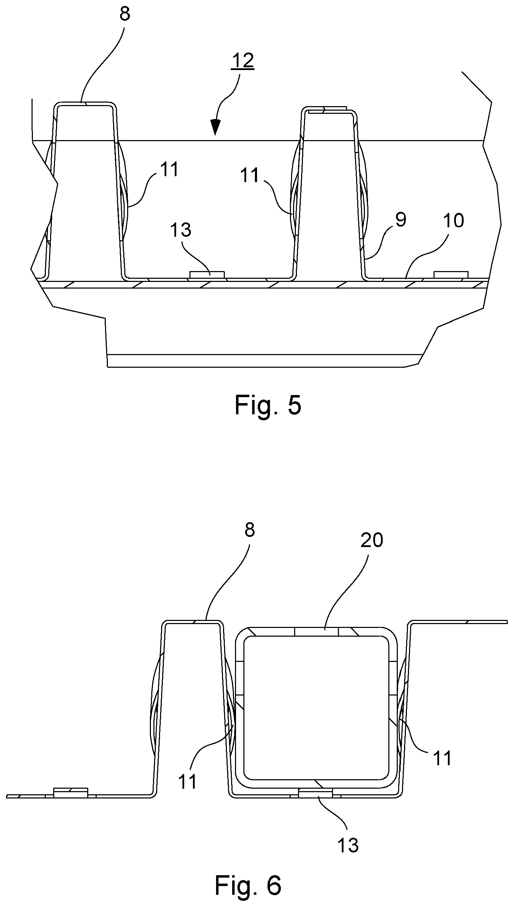

The impressions 11 can be formed by cams or elevations relative to the sides 9 of the profile 8 and can either in themselves be springy or the side 9 of the profile 8 can have a springy effect and thus press the impression 11 towards the sides or edges of the column 20, when the column 20 is arranged in the channel 12 of the profile 8. An example of arrangement of a column 20 in the profile 8 is illustrated in Fig. 6.

In one embodiment, the columns 20 are configured with a rectangular cross section in the form of a square tube.

In an alternative embodiment, it is possible to configure the columns with a square cross section to ensure sufficient clamping force at arrangement in the channel 12 of the profile 8 regardless of whether the column is rotated 90 degrees about its longitudinal axis.

Other cross sections can also be used for the columns. What is important is that the impressions 11 can clamp around a column 20 and thereby retain it in the channel 12 and that the column 20 is supported by the impressions or the protrusions 13 in the base 10 of the channel 12.

In one embodiment, an impression or a protrusion 13 is formed in the base 10 of the channel 12 of the profile 8, rising from the profile base 10. The impression or the protrusion 13 can be formed by a cam or a elevation relative to the base 10 of the profile 8. Several impressions or protrusions 13 can be formed along the base 10 of the profile 8.

The impressions 11 of the plane sides 9 of the profile 8 can be arranged in pairs substantially opposite each other, and the impressions 11 can be arranged travelling slantwise, such that a lower end of the impressions 11 is closer to the nearest end of the profile 8 relative to an upper end of the impression 11.

The load carrier 1 can also be provided with an impression or a protrusion 13 rising from the profile 8 base 10 arranged on a level with a pair of impressions 11 in the plane sides 9 of the profile 8.

A set of impressions 11 and/or protrusions 13 can also be arranged in one end area 14 at both ends of the profile 8.

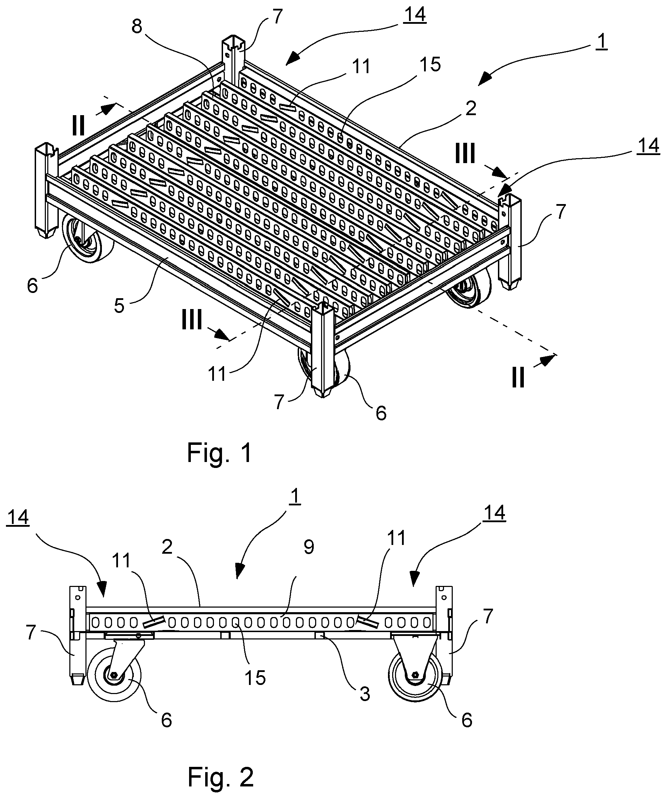

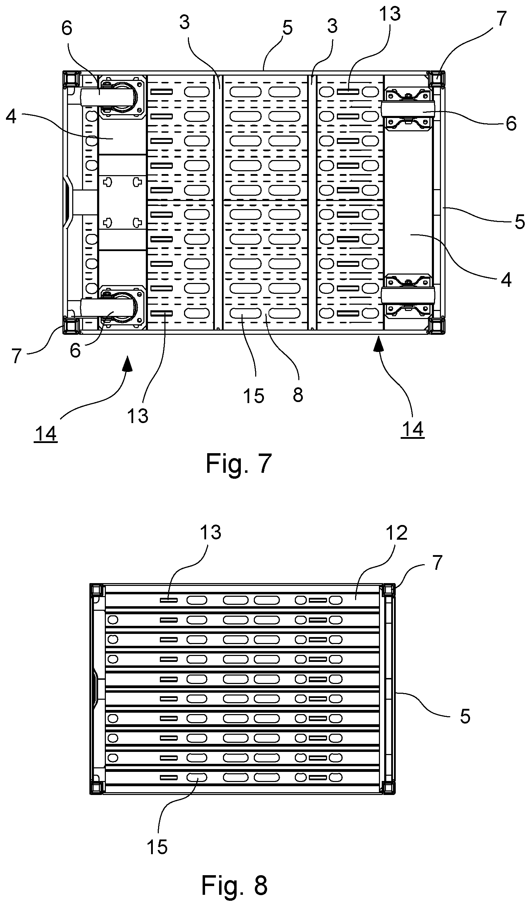

An end area 14 is to be understood as an area close to an end of the profile 8 and is illustrated in for example Figs 1, 2 and 7.

The sides 9 and/or base 10 of the profile 8 can be provided with openings 15, which allows for reducing noise as the noise can thus not be reinforced by through-going surfaces. A side effect of this is also that a weight reduction is obtained.

In one embodiment of the load carrier, the profiles 8 can have a trapezoid cross section.

In one embodiment of the load carrier, the profiles 8 can be placed with their upwardly open channels 12 travelling in the longitudinal direction of the base frame 2.

In an alternative embodiment of the load carrier, the profiles 8 can be placed with their upwardly open channels 12 travelling in the transverse direction of the base frame 2.

This gives shorter profiles than if they were placed longitudinally, which means that the column parts 20 that can be stored in the channels 12 of the profiles 8 will have to be shorter. On the other hand, there is room for more column parts 20, as more profiles 8 can be arranged next to each other in this embodiment.

When assembled in the holders 7, the columns 20 are intended for carrying a number of shelves (not shown), and the columns 20 are therefore provided with a number of notches or grooves (not shown) spaced evenly apart from each other (equidistant). To ensure that an impression 11 does not fit into such a groove, when the columns 20 are arranged in the channel 12 of a profile 8, it is an advantage that the impressions 11 in the sides 9 of the profile 8 travel slantwise.

To prevent an impression or elevation 13 in the base 10 of a profile 8 from fitting into a groove in the column 20, the base 10 of the profile 8 can advantageously be provided with more than two impressions or elevations 13.

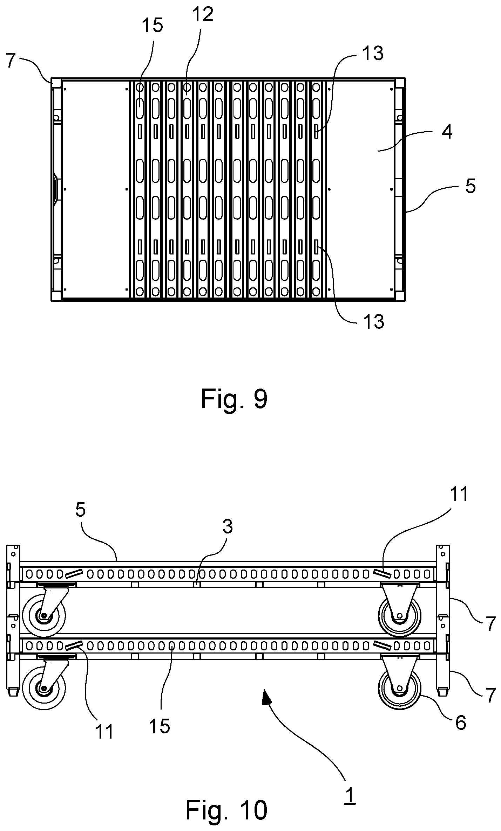

As shown in Fig. 10, the load carriers 1 can be stacked on top of each other on return. Here the connections 7 rest against each other in the corners. When the load carriers 1 are transported while carrying products, for example for distribution, stacking can also take place. Here columns (not shown in Fig. 10) mounted in the connections 7 in the corners will establish a distance between an upper and a lower load carrier 1. Several load carriers 1 can be stacked on top of each other separated in the height by column parts, wherein the total height is determined by the cargo compartment, in which the load carriers 1 are to be transported.

In one embodiment, the shelves can be stacked on top of each other and be arranged on the load carrier supported or delimited by the corner connections 7.

Thus, the profiles 8 constitute storage facilities for storage of columns or column parts 20, wherein it is possible to store a number of columns 20, both when the load carrier 1 is returned after use and for storing a number of surplus columns 20 not in use. Thereby it is possible to store additional column parts 20 in the profiles during use of the load carrier 1.

The column parts 20 can be adjusted in the length, so that the column parts 20 are shorter than the length of the profiles 8. Thus, the column portions 20 do not project beyond the base frame 2 of the load carrier 1.

## Claims

1. A load carrier (1) comprising a rectangular base frame (2) with a number of transverse or longitudinal bars (3) and/or plate portions (4) surrounded by a frame portion (5), which base frame (2), on its bottom face, is provided with at least two sets of wheels (6), and wherein in each corner of the base frame connections (7) are formed for attachment of a column (20), where, on the transverse or longitudinal bars (3) and/or plate portions (4) of the base frame (2), one or more substantially U-shaped profiles (8) with plane sides (9) and base (10) are attached, **characterized in that,** the plane sides (9) of the profile (8) in one or more areas are provided with impressions (11) extending into an upwardly open channel (12) of the profile (8).

2. A load carrier according to claim 1, wherein an impression or a protrusion (13) is formed in base (10) of the channel (12) of the profile (8), rising from the profile base (10).

3. A load carrier according to anyone of claims 1 or 2, wherein the impressions (11) in the plane sides (9) of the profile (8) are arranged in pairs substantially opposite each other, and the impressions (11) are arranged travelling slantwise, such that a lower end of the impressions (11) is closer to the nearest end of the profile (8) relative to an upper end of the impression (11).

4. A load carrier according to anyone of claims 2 or 3, wherein an impression or protrusion (13), rising from the base (10) of the profile (8), is arranged on a level with a pair of impressions (11) in the plane sides (9) of the profile (8).

5. A load carrier according to anyone of claims 1-4, wherein a set of impressions (11) and/or protrusions (13) is arranged at an end area (14) at both ends of the profile (8).

6. A load carrier according to anyone of claims 1-5, wherein the sides (9) and/or base (10) of the profile (8) are provided with openings (15).

7. A load carrier according to anyone of claims 1-6, wherein the cross section of the profiles (8) is trapezoid.

8. A load carrier according to anyone of claims 1-7, wherein the profiles (8) are placed with their upwardly open channels (12) travelling in the longitudinal direction of the base frame (2).

9. A load carrier according to anyone of claims 1-7, wherein the profiles (8) are placed with their upwardly open channels (12) travelling in the transverse direction of the base frame (2).

## Patentansprüche

1. Lastenträger (1), umfassend einen rechteckigen Basisrahmen (2) mit einer Anzahl an Quer- oder Längsbalken (3) und/oder Plattenabschnitten (4), die durch einen Rahmenabschnitt (5) umgeben sind, wobei der Basisrahmen (2) auf seiner Bodenfläche mit mindestens zwei Sätzen von Rädern (6) versehen ist und wobei in jeder Ecke des Basisrahmens Verbindungen (7) zur Befestigung einer Säule (20) gebildet sind, wobei auf den Quer- oder Längsbalken (3) und/oder den Plattenabschnitten (4) des Basisrahmens (2) ein oder mehrere im Wesentlichen U-förmige Profile (8) mit flachen Seiten (9) und Basis (10) befestigt sind, **dadurch gekennzeichnet, dass** die flachen Seiten (9) des Profils (8) in einem oder mehreren Bereichen mit Vertiefungen (11) versehen sind, die sich in einen nach oben offenen Kanal (12) des Profils (8) erstrecken.

2. Lastenträger nach Anspruch 1, wobei eine Vertiefung oder ein Vorsprung (13) in einer Basis (10) des Kanals (12) des Profils (8) gebildet ist, die/der sich von der Profilbasis (10) erhebt.

3. Lastenträger nach einem der Ansprüche 1 oder 2, wobei die Vertiefungen (11) in den flachen Seiten (9) des Profils (8) in Paaren angeordnet sind, die einander im Wesentlichen gegenüberliegen, und die Vertiefungen (11) derart schräg verlaufend angeordnet sind, dass sich ein niedrigeres Ende der Vertiefungen (11) in Bezug auf ein höheres Ende der Vertiefung (11) näher an dem nächsten Ende des Profils (8) befindet.

4. Lastenträger nach einem der Ansprüche 2 oder 3, wobei eine Vertiefung oder ein Vorsprung (13), die/der sich von der Basis (10) des Profils (8) erhebt, auf einer Ebene mit einem Paar von Vertiefungen (11) in den flachen Seiten (9) des Profils (8) angeordnet ist.

5. Lastenträger nach einem der Ansprüche 1-4, wobei ein Satz von Vertiefungen (11) und/oder Vorsprüngen (13) an einem Endbereich (14) an beiden Enden des Profils (8) angeordnet ist.

6. Lastenträger nach einem der Ansprüche 1-5, wobei die Seiten (9) und/oder die Basis (10) des Profils (8) mit Öffnungen (15) versehen sind.

7. Lastenträger nach einem der Ansprüche 1-6, wobei der Querschnitt der Profile (8) trapezförmig ist.

8. Lastenträger nach einem der Ansprüche 1-7, wobei die Profile (8) mit ihren nach oben offenen Kanälen (12) in der Längsrichtung des Basisrahmens (2) verlaufend platziert sind.

9. Lastenträger nach einem der Ansprüche 1-7, wobei die Profile (8) mit ihren nach oben offenen Kanälen (12) in der Querrichtung des Basisrahmens (2) verlaufend platziert sind.

## Revendications

1. Support de charge (1) comprenant un cadre de base rectangulaire (2) avec un certain nombre de barres transversales ou longitudinales (3) et/ou de parties de plaque (4) entourées par une partie de cadre (5), lequel cadre de base (2), sur sa face inférieure, est pourvu d'au moins deux ensembles de roues (6), et dans lequel dans chaque coin du cadre de base des raccords (7) sont formées pour la fixation d'une colonne (20), où, sur les barres transversales ou longitudinales (3) et/ou les parties de plaque (4) du cadre de base (2), un ou plusieurs profilés sensiblement en forme de U (8) avec des côtés plans (9) et une base (10) sont fixés, **caractérisé en ce que,** les côtés plans (9) du profilé (8) dans une ou plusieurs zones sont pourvus d'empreintes (11) s'étendant dans un canal (12) ouvert vers le haut du profilé (8).

2. Support de charge selon la revendication 1, dans lequel une empreinte ou une saillie (13) est formée dans la base (10) du canal (12) du profilé (8), s'élevant à partir de la base du profilé (10).

3. Support de charge selon l'une quelconque des revendications 1 ou 2, dans lequel les empreintes (11) dans les côtés plans (9) du profilé (8) sont disposées par paires sensiblement opposées l'une à l'autre, et les empreintes (11) sont disposées en se déplaçant en biais, de sorte qu'une extrémité inférieure des empreintes (11) est plus proche de l'extrémité la plus proche du profilé (8) par rapport à une extrémité supérieure de l'empreinte (11).

4. Support de charge selon l'une quelconque des revendications 2 ou 3, dans lequel une empreinte ou saillie (13), s'élevant à partir de la base (10) du profilé (8), est disposée au niveau d'une paire d'empreintes (11) dans les côtés plans (9) du profilé (8).

5. Support de charge selon l'une quelconque des revendications 1 à 4, dans lequel un ensemble d'empreintes (11) et/ou de saillies (13) est disposé au niveau d'une zone d'extrémité (14) aux deux extrémités du profilé (8).

6. Support de charge selon l'une quelconque des revendications 1 à 5, dans lequel les côtés (9) et/ou la base (10) du profilé (8) sont pourvus d'ouvertures (15).

7. Support de charge selon l'une quelconque des revendications 1 à 6, dans lequel la section transversale des profilés (8) est trapézoïdale.

8. Support de charge selon l'une quelconque des revendications 1 à 7, dans lequel les profilés (8) sont placés avec leurs canaux (12) ouverts vers le haut se déplaçant dans la direction longitudinale du cadre de base (2).

9. Support de charge selon l'une quelconque des revendications 1 à 7, dans lequel les profilés (8) sont placés avec leurs canaux (12) ouverts vers le haut se déplaçant dans la direction transversale du cadre de base (2).
